# FASCICULE DE BREVET EUROPEEN

(11) **EP 0 960 683 B1**
(45) Date de publication et mention de la délivrance du brevet: **05.11.2003**
(21) Numéro de dépôt: 99420122.6
(22) Date de dépôt: 21.05.1999
(51) Int. Cl.: B23K 26/00, B21J 13/02

(54) **Procédé de fabrication d'outils de forgeage à chaud, et outils obtenus par ce procédé.**
Verfahren zur Herstellung von Warmschmiedgeräten, und durch dieses Verfahren hergestellte Geräte
Process of manufacturing of hot forging tools, and tools obtained by this process

(30) Priorité: 26.05.1998 FR 9806981
(43) Date de publication de la demande: 01.12.1999
(73) Titulaire: TECHNOGENIA S.A., 74410 Saint-Jorioz (FR)
(72) Inventeur: Dezert, Didier, 74540 Chapeiry (FR); Ducoin, Franck, 07430 Saint Cyr (FR); Maybon, Guy, 74410 Saint Jorioz (FR)
(74) Mandataire: Poncet, Jean-François

(56) Documents cités:
- DE-A- 3 505 251
- DE-A- 3 519 114
- PATENT ABSTRACTS OF JAPAN vol. 006, no. 143 (C-117), 3 août 1982 (1982-08-03) & JP 57 067117 A (TOSHIBA CORP), 23 avril 1982 (1982-04-23)

## Description

La présente invention concerne les outillages resp. Un procédé de fabrication de tels outillages conformément aux préambules des revendications 8 resp. 1 de forgeage à chaud, notamment les matrices et poinçons de forgeage à chaud, utilisés pour former une pièce métallique par déformation plastique à chaud du matériau à forger. La déformation plastique du matériau s'effectue généralement par utilisation successive d'outils de mise en forme, d'outils d'ébauche, et d'outils de finition.

Les outils de forgeage à chaud supportent des sollicitations mécaniques, thermiques et tribologiques élevées, susceptibles de dégrader rapidement les outils. Les sollicitations mécaniques sont induites par l'opération de déformation plastique du matériau à forger, et peuvent être de l'ordre de 600 à 800 MPa en estampage. Les sollicitations thermiques sont généralement caractérisées par un choc thermique brutal lors du contact de l'outil avec le métal à forger. En estampage, le pic de température peut atteindre, en surface, 650°C à 750°C, voir plus dans le cas de forgeage difficile. Les sollicitations tribologiques sont provoquées par le déplacement sous pression du métal forgé sur les surfaces actives de l'outil.

Ces sollicitations produisent en général une déformation plastique de l'outil lui-même, en superficie ou dans la masse, une usure, et une fatigue thermique se traduisant notamment par des craquelures ou fissurations. Ces altérations des outillages concernent principalement les surfaces actives des outils qui sont simultanément portées à haute température et soumises à des sollicitations mécaniques intenses. Ces altérations représentent les causes les plus fréquentes de mise hors service des outillages.

Pour augmenter la résistance de l'outil à ces différentes sollicitations, on peut tenter de réaliser l'outil dans un alliage présentant des qualités supérieures. Cependant, la réalisation d'outils massifs en alliages à haute résistance mécanique à chaud a l'inconvénient d'un coût élevé. De plus, l'approvisionnement de la matière première sous forme de barres ou de ronds de dimensions adaptées constitue un épineux problème.

Une solution, décrite dans le document US 4 628 178 A, présentant l'état de la technique la plus pertinent, consiste à braser sur un corps en acier une pièce en carbure cémenté ayant des grains de carbure de tungstène liés dans un alliage de nickel, de fer ou de cobalt. Le brasage s'effectue au moyen d'un rayon laser qui fond une couche métallique intermédiaire interposée entre le corps en acier et la pièce en carbure cémenté. Il convient de résoudre le problème de souder deux matériaux (acier, carbure) ayant des caractéristiques physiques très éloignées. En outre, la pièce en carbure cémenté doit avoir au préalable la forme de la surface de l'outil à réaliser. Ce procédé n'est pas adapté à la réalisation d'outils dont les surfaces de travail ont des formes complexes, ce qui est fréquent en pratique.

Le document DE 35 05 251 A décrit la réalisation d'une tête sphérique à l'extrémité d'une tige, par fusion de l'extrémité de tige et d'un métal d'apport au moyen d'un rayon laser, puis moulage du métal fondu dans un moule de forme. Ce procédé nécessite un moule ayant la forme de la surface à réaliser, et n'est donc pas économique pour la réalisation d'outils dont les surfaces de travail ont des formes complexes.

Le document JP 57 067 117 A enseigne de traiter thermiquement une partie anguleuse de moule métallique par échauffement au moyen d'un rayon laser. L'échauffement ramollit le métal, sans le fondre. Cela ne permet pas de réaliser une couche superficielle en un matériau différent du substrat.

Pour pallier ces inconvénients, on peut imaginer de réaliser une couche superficielle d'outil en alliages métalliques à haute résistance à chaud, notamment en superalliages tels que ceux utilisés pour la réalisation de pièces métalliques réfractaires. Il est alors naturel de préférer les méthodes de rechargement les plus simples permettant de réaliser à moindre coût un dépôt par fusion d'alliages métalliques sur un substrat. Ces procédés classiques de rechargement métallique consistent à faire fondre un cordon ou une baguette de matériau d'apport au moyen d'un chalumeau oxyacétylénique, ou à l'arc électrique, ou par des procédés à l'arc électrique connus sous les vocables TIG ou MIG. Ces procédés sont manuels, l'utilisateur déplaçant à la main le point de rechargement pour couvrir progressivement la surface à recharger. De tels procédés sont a priori bien adaptés à la fabrication d'outils de forgeage à chaud, qui sont des pièces relativement rustiques et massives.

Lorsqu'on utilise les outils de forgeage à chaud à couches superficielles en superalliages déposées par les procédés traditionnels de soudure de baguette par chalumeau oxyacétylénique ou par arc électrique, ou par les procédés connus sous les vocables TIG ou MIG, on constate que leur durée de vie est de 4 à 5 fois supérieure à celle d'un outil homogène réalisé en acier nitruré, quel que soit le procédé classique de dépôt de superalliages utilisé. Cette amélioration résulte des propriétés des superalliages utilisés.

Toutefois, dans un contexte concurrentiel de plus en plus sévère, les forgerons sont amenés à baisser leur coût de fabrication, notamment en réduisant la part d'outillage dans le prix de revient des pièces forgées. A cet effet, une augmentation de la durée de vie des outillages reste un problème essentiel. Un autre problème est la réduction du coût de réalisation des outillages.

La présente invention résulte de l'observation d'un effet inattendu lorsque des outils de forgeage à chaud sont réalisés par fusion d'alliages métalliques à haute résistance à chaud sur un substrat au moyen d'un laser de puissance. On constate en effet que la durée de vie de tels outils de forgeage à chaud peut se trouver augmentée de plus de 30 %, par rapport à la durée de vie des mêmes outils dans lesquels les mêmes alliages métalliques à haute résistance à chaud sont déposés au moyen des procédés traditionnels de soudure.

Ainsi, pour augmenter la durée de vie des outils de forgeage à chaud, la présente invention prévoit un procédé de fabrication d'outils de forgeage selon la revendication 1.

Rien ne laissait a priori entrevoir un quelconque intérêt d'un procédé de rechargement par laser d'alliage métallique à haute résistance à chaud pour réaliser un outil de forgeage à chaud. En effet, un procédé de rechargement métallique par fusion au moyen d'un laser de puissance est a priori moins bien adapté que les procédés de rechargement classiques pour la fabrication de pièces massives et rustiques telles que des outils de forgeage à chaud, à cause de sa complexité, de son coût de mise en oeuvre et du coût élevé de tout équipement à laser de puissance. Malgré cela et de façon surprenante, il apparaît que l'invention permet de réaliser une économie substantielle car l'augmentation sensible de la durée de vie des outils de forgeage à chaud compense largement le surcoût de fabrication de ces outils résultant du procédé de fusion au laser.

D'excellents résultats sont obtenus lorsque le ou les alliages métalliques à haute résistance à chaud sont du type superalliage à base de cobalt ou de nickel.

On pourra avantageusement choisir le ou les superalliages dans la famille des superalliages à base de nickel comprenant les superalliages connus sous les marques INCONEL 718 ou ASTROLOY.

On pourra également choisir le ou les superalliages dans la famille des superalliages à base de cobalt comprenant les superalliages connus sous les appellations GRADE 21 ou GRADE 6.

D'excellents résultats sont obtenus notamment avec le superalliage de cobalt connu sous l'appellation GRADE 21.

Un outillage de forgeage à chaud selon l'invention comprend une couche superficielle en un ou plusieurs alliages métalliques à haute résistance à chaud sur un substrat métallique, et est ainsi caractérisé en ce que la couche superficielle d'alliage(s) métallique(s) à haute résistance à chaud présente une structure cristallographique particulière qui résulte d'un dépôt à l'état fondu dudit ou desdit alliages métalliques à haute résistance à chaud effectué par fusion au laser de puissance et est liée au substrat par une liaison métallurgique. On pense que l'amélioration des propriétés de l'outillage de forgeage à chaud est due à une structure cristallographique plus fine résultant du refroidissement plus rapide du superalliage.

La couche superficielle d'alliage(s) métallique(s) à haute résistance à chaud peut avantageusement être en superalliage à base de nickel connu sous les marques INCONEL 718 ou ASTROLOY, ou en superalliage de cobalt connu sous les appellations GRADE 21 ou GRADE 6.

D'autres objets, caractéristiques et avantages de la présente invention ressortiront de la description suivante de modes de réalisation particuliers, faite en relation avec les figures jointes, parmi lesquelles:
- la figure 1 illustre schématiquement, en coupe transversale, une structure d'outillage de forgeage à chaud selon un mode de réalisation particulier de l'invention ;
- la figure 2 illustre un dispositif de rechargement au laser pour la fabrication d'outils de forgeage à chaud selon l'invention ; et
- la figure 3 illustre schématiquement, à plus grande échelle, une buse coaxiale de projection de poudre métallique et de faisceau laser sur une zone d'impact, selon le dispositif de rechargement au laser de la figure 2.

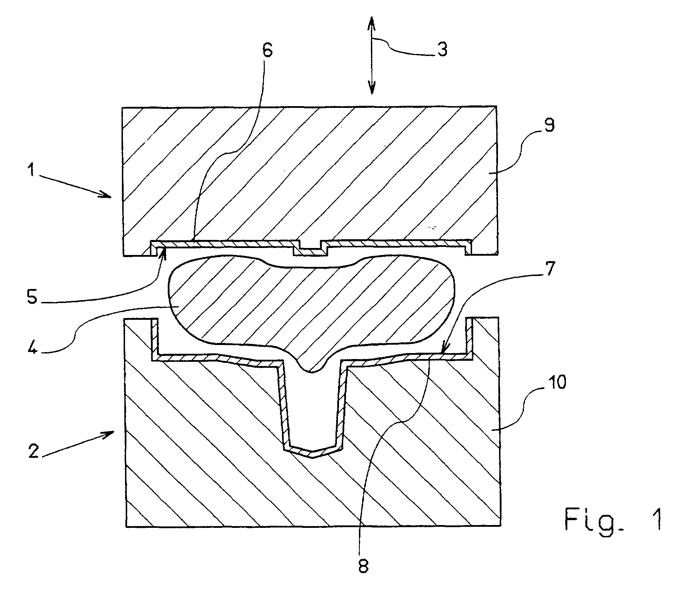

Dans le mode de réalisation illustré schématiquement sur la figure 1, un outillage de forgeage à chaud selon l'invention comprend un poinçon 1 et une matrice 2, destinés à être déplacés l'un par rapport à l'autre selon une direction de déplacement 3 lors de l'opération de forgeage d'une masse métallique 4 à forger. La surface active 5 du poinçon 1, destinée à être en contact avec la masse métallique 4 à forger, est la surface externe d'une couche d'alliage(s) métallique(s) à haute résistance à chaud 6. De même, la surface active 7 de la matrice 2 est la surface extérieure d'une couche d'alliage(s) métallique(s) à haute résistance à chaud 8.

Selon l'invention, les couches d'alliage(s) métallique(s) à haute résistance à chaud 6 et 8 sont réalisées par dépôt par fusion d'un ou plusieurs alliages métalliques à haute résistance à chaud sur un substrat métallique respectivement 9 ou 10, la fusion du ou des alliages métalliques à haute résistance à chaud pour leur dépôt étant effectuée au moyen d'un laser de puissance qui assure simultanément la liaison métallurgique entre le ou les alliages de la couche superficielle et le métal du substrat. Ainsi, la couche superficielle d'alliage(s) métallique(s) à haute résistance à chaud 6 ou 8 présente une structure cristallographique fine, caractéristique d'un dépôt effectué par fusion au laser de puissance.

Le ou les alliages métalliques à haute résistance à chaud peuvent avantageusement comprendre des superalliages à base de cobalt ou de nickel, avantageusement des superalliages de nickel connus sous les marques INCONEL 718 ou ASTROLOY, ou un superalliage de cobalt connu sous les appellations GRADE 21 ou GRADE 6.

Pour réaliser un outil de forgeage à chaud selon l'invention, tel qu'un poinçon 1 ou une matrice 2, on part d'un substrat 9 ou 10, par exemple en acier et présentant sensiblement la forme de l'outil définitif, et on effectue un rechargement au laser de la surface active 5 ou 7, au moyen d'un générateur de faisceau laser balayant la surface à recharger et associé à une buse de projection de poudre dirigeant sur la zone d'impact du faisceau laser une poudre à base d'alliage(s) métallique(s) à haute résistance à chaud.

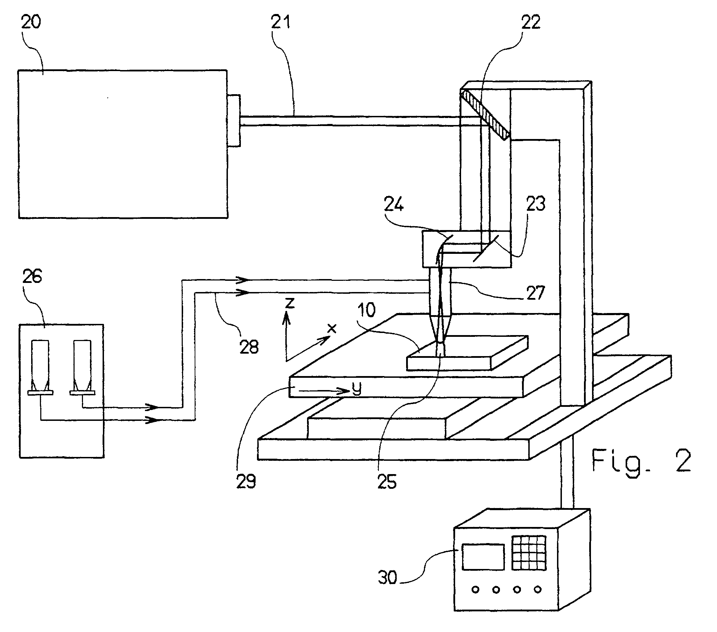

La figure 2 illustre schématiquement une installation de rechargement au laser qui peut être utilisée selon l'invention. Cette installation comprend un laser de puissance 20 qui délivre un faisceau 21 de lumière cohérente et monochromatique. Le faisceau laser 21 se propage dans une seule direction, de façon homogène, et présente une seule longueur d'onde. La divergence du faisceau est très faible.

Un jeu de miroirs de renvoi 22 et 23 permet de transporter le faisceau laser 21 jusque sur une tête de focalisation 24. La tête de focalisation 24 renvoit le faisceau laser 21 sur la surface à recharger du substrat 10 d'un outil tel qu'une matrice de forgeage à chaud. La tête de focalisation 24 est adaptée pour focaliser le faisceau laser 21 de façon que celui-ci frappe le substrat 10 selon une zone d'impact 25 de faible surface, par exemple une surface présentant un diamètre compris entre 0,5 et 5 mm environ.

Un distributeur de poudre 26 sert de réservoir contenant une poudre d'alliage(s) métallique(s) à haute résistance à chaud destinée à former le rechargement sur le substrat 10 de la matrice. Le distributeur de poudre 26 est adapté pour fluidifier la poudre à l'aide d'un gaz neutre tel que l'argon ou l'hélium, et pour la transporter pneumatiquement jusqu'à une buse de projection 27 par des canalisations 28 d'amenée de poudre. La buse de projection 27 est adaptée pour mettre en forme le jet de poudre fluidifiée en sortie de buse, pour produire un jet de poudre convergent venant frapper la même zone d'impact 25 du substrat 10. Le jet de poudre fluidifiée en sortie de buse doit se confondre le plus possible avec la forme du faisceau laser 21 dans la zone d'impact 25. De préférence, le jet de poudre fluidifiée est coaxial avec le faisceau laser 21 à son arrivée sur la zone d'impact 25.

Le distributeur de poudre 26 est d'un type permettant de contrôler précisément le débit massique de poudre métallique, pour obtenir une excellente reproductibilité et une régularité parfaite de débit, paramètres qui ont une influence directe sur la régularité et la qualité des rechargements obtenus. La régularité du rechargement permet de diminuer sensiblement les temps et les coûts d'usinage finaux de la surface active de l'outil. Cette régularité permet également de réduire l'épaisseur du rechargement, et donc la quantité de matière à utiliser.

Le faisceau laser est orienté pour être proche de la verticale de la surface du substrat 10 à recharger. L'orifice de sortie de la buse de projection 27 est maintenu à une distance constante de la surface à recharger, environ 10 mm. Le substrat 10 est placé sur une table 29 qui est déplacée dans le plan horizontal selon deux directions X et Y par des moyens d'entraînement pilotés par une commande numérique 30. Par ce déplacement, la zone d'impact 25 du faisceau laser et de la poudre sortant de la buse de projection 27 est déplacée progressivement et régulièrement sur la surface du substrat 10 à recharger.

Dans la zone d'impact 25, le faisceau laser 21 fait fondre la poudre d'alliage(s) métallique(s), qui se soude au substrat 10 métallique et forme progressivement, après refroidissement, la couche d'alliage(s) métallique(s) à haute résistance à chaud 8 dont la surface externe forme la surface active 7 de l'outil de forgeage à chaud.

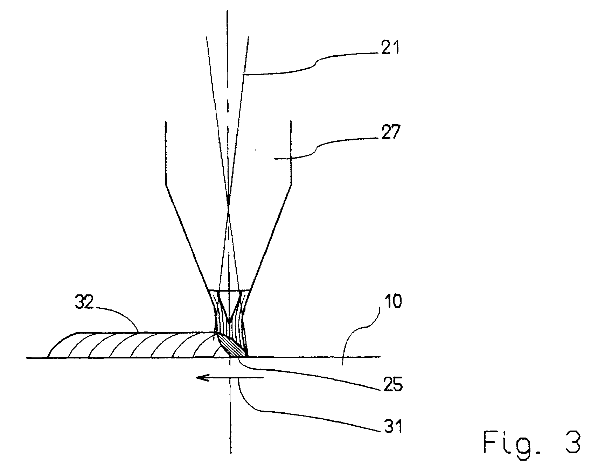

La figure 3 illustre le rechargement progressif, par déplacement du substrat 10 dans la direction 31. Dans la zone d'impact 25, le faisceau laser 21 fait fondre la poudre d'alliage(s) métallique(s), qui se soude au substrat 10 et forme progressivement, après refroidissement, un cordon de dépôt 32. Par déplacement transversal du substrat 10, on réalise ensuite un second cordon parallèle et adjacent, et ainsi de suite jusqu'à recharge complète de la surface active.

Le laser de puissance 20 peut être un laser CO₂ continu, de puissance 5 kW, associé à une buse de projection 27 coaxiale dans laquelle la poudre fluidifiée de métal est amenée selon un mouvement hélicoïdal coaxial au faisceau laser. Le substrat 10 peut avantageusement être porté par un support de pièces de machine à commande numérique quatre axes, permettant les déplacements horizontaux X et Y, permettant le déplacement vertical Z par rapport à la buse de projection 27, et permettant une rotation selon un axe horizontal.

Ainsi, selon l'invention, la fusion du ou des alliages métalliques à haute résistance à chaud, pour leur dépôt par fusion sur un substrat 10 d'outil de forgeage à chaud, est effectuée au moyen d'un laser de puissance 20. Les alliages métalliques à haute résistance à chaud sont projetés sous forme de poudre sur le substrat 10 dans la zone d'impact 25 du faisceau 21 provenant du laser de puissance 20. La projection des alliages métalliques à haute résistance à chaud sous forme de poudre est effectuée au moyen d'une buse de projection 27 coaxiale autour du faisceau laser 21.

Il est important de déplacer la zone d'impact 25 du faisceau laser 21 sur le substrat 10 selon une vitesse de balayage contrôlée constante.

Le ou les alliages métalliques à haute résistance à chaud peuvent avantageusement être du type superalliage à base de cobalt ou de nickel.

Le ou les superalliages peuvent être choisis dans la famille des superalliages à base de nickel, comprenant les superalliages connus sous les marques INCONEL 718 ou ASTROLOY.

La composition de l'alliage INCONEL 718 est la suivante, en pour-cent en poids : carbone 0,038 ; chrome 18,50 ; molybdène 3,00 ; titane 0,95 ; aluminium 0,55 ; niobium 5,25 ; fer 18,00 ; le reste en nickel.

La composition de l'alliage ASTROLOY est la suivante, en pour-cent en poids : carbone 0,025 ; chrome 15,00 ; molybdène 5,00 ; cobalt 18,00 ; titane 3,50 ; aluminium 4,00 ; bore 0,025 ; zirconium 0,050 ; le reste en nickel.

D'excellents résultats ont été obtenus en utilisant un superalliage à base de cobalt connu sous l'appellation GRADE 21 dont la composition est la suivante, en pour-cent en poids : carbone 0,25 ; chrome 27,00 ; molybdène 3,00 à 5,50 ; nickel 3,00 ; le reste en cobalt.

En alternative ou en complément, on peut avantageusement utiliser un superalliage à base de cobalt connu sous l'appellation GRADE 6, dont la composition est la suivante, en pour-cent en poids : carbone 1,00 ; chrome 28,00 ; tungstène 4,00 ; le reste en cobalt.

A titre d'exemple et de comparaison, on a évalué la durée de vie de matrices de forgeage à chaud réalisées selon plusieurs techniques : le nombre de pièces forgées à l'aide de la matrice, avant mise au rebut de la matrice, a été de 30 000 pièces pour une matrice en acier nitruré de référence X 38 Cr Mo V 5 nitruré, de 120 000 pièces avec une matrice rechargée en superalliage base cobalt GRADE 21 au moyen d'un procédé de soudage à l'arc, et de 160 000 pièces pour une matrice rechargée en superalliage base cobalt GRADE 21 au moyen d'un laser de puissance. Ainsi, une augmentation de plus de 30 % de la durée de vie a été constatée lorsque le rechargement est effectué au moyen d'un laser de puissance.

La présente invention n'est pas limitée aux modes de réalisation qui ont été explicitement décrits, mais elle en inclut les diverses variantes et généralisations contenues dans le domaine des revendications ci-après.

## Revendications

1. Procédé de fabrication d'outils de forgeage à chaud ayant une couche superficielle en un ou plusieurs alliages métalliques à haute résistance à chaud sur un substrat (10) métallique, **caractérisé en ce que** la couche superficielle est réalisée par dépôt à l'état fondu dudit ou desdits alliages métalliques à haute résistance à chaud, et la fusion dudit ou desdits alliages métalliques à haute résistance à chaud pour le dépôt est effectuée au moyen d'un laser de puissance (20), qui assure simultanément la liaison métallurgique entre le ou les alliages métalliques de la couche superficielle et le métal du substrat (10).

2. Procédé selon la revendication 1, **caractérisé en ce qu'**on projette le ou les alliages métalliques à haute résistance à chaud sous forme de poudre sur le substrat (10) dans la zone d'impact (25) du faisceau (21) provenant du laser de puissance (20).

3. Procédé selon la revendication 2, **caractérisé en ce qu'**on projette le ou les alliages métalliques à haute résistance à chaud sous forme de poudre au moyen d'une buse de projection (27) coaxiale autour du faisceau laser (21).

4. Procédé selon l'une quelconque des revendications 1 à 3, **caractérisé en ce qu'**on déplace la zone d'impact (25) du faisceau laser (21) sur le substrat (10) selon une vitesse de balayage contrôlée constante.

5. Procédé selon l'une quelconque des revendications 1 à 4, **caractérisé en ce que** le ou les alliages métalliques à haute résistance à chaud sont du type superalliage à base de cobalt ou de nickel.

6. Procédé selon la revendication 5, **caractérisé en ce que** le ou les superalliages sont choisis dans la famille des superalliages à base de nickel comprenant les superalliages connus sous les marques INCONEL 718 ou ASTROLOY.

7. Procédé selon la revendication 5, **caractérisé en ce que** le ou les superalliages sont choisis dans la famille des superalliages à base de cobalt comprenant les superalliages connus sous les appellations GRADE 21 ou GRADE 6.

8. Outil de forgeage à chaud, comprenant une couche superficielle (8) en un ou plusieurs alliages métalliques à haute résistance à chaud sur un substrat (10) métallique, **caractérisé en ce que** la couche superficielle d'alliage(s) métallique(s) à haute résistance à chaud (8) présente une structure cristallographique d'un dépôt à l'état fondu dudit ou desdit alliages métalliques à haute résistance à chaud effectué par fusion au laser de puissance, et **en ce que** la couche superficielle (8) et le substrat (10) sont liés par une liaison métallurgique.

9. Outil selon la revendication 8, **caractérisé en ce que** le ou les alliages métalliques à haute résistance à chaud comprennent des superalliages à base de cobalt ou de nickel.

10. Outil selon la revendication 9, **caractérisé en ce que** la couche superficielle d'alliage(s) métallique(s) à haute résistance à chaud (8) est en superalliage à base de nickel connu sous les marques INCONEL 718 ou ASTROLOY, ou en superalliage de cobalt connu sous les appellations GRADE 21 ou GRADE 6.

## Patentansprüche

1. Verfahren zur Herstellung von Warmschmiedegeräten mit einer Oberflächerischichtung aus einer oder mehreren metallischen Legierungen mit hoher Hitzebeständigkeit auf einem metallischen Substrat (10), **dadurch gekennzeichnet,**
**daß** die Oberflächenschicht durch Abscheiden der genannten metallischen Legierung oder Legierungen mit hoher Hitzebeständigkeit in geschmolzenem Zustand erfolgt und daß das Schmelzen der genannten metallischen Legierung oder Legierungen mit hoher Hitzebeständigkeit zum Abscheiden mittels eines Leistungslasers (20) bewirkt wird, der gleichzeitig die metallurgische Verbindung zwischen der oder den metallischen Legierungen der Oberflächenschicht und des Metalls des Substrates (10) sicherstellt.

2. Verfahren nach Anspruch 1, **dadurch gekennzeichnet, daß** man die metallische Legierung oder Legierungen mit hoher Hitzebeständigkeit in Form eines Pulvers auf das Substrat (10) in eine Auftreffzone (25) des von dem Leistungslaser (20) stammenden Strahles (21) aufschleudert.

3. Verfahren nach Anspruch 2, **dadurch gekennzeichnet, daß** man die metallische Legierung oder Legierungen mit hoher Hitzebeständigkeit in Pulverform mittels einer Aufschleuderdüse (27) aufschleudert, die koaxial um den Laserstrahl (21) herumliegt.

4. Verfahren nach einem der Ansprüche 1 bis 3, **dadurch gekennzeichnet,**
**daß** man die Auftreffzone (25) des Laserstrahls (21) auf dem Substrat (10) mit einer konstant gesteuerten Vorschubgeschwindigkeit verschiebt.

5. Verfahren nach einem der Ansprüche 1 bis 4, **dadurch gekennzeichnet,**
**daß** die metallische Legierung oder Legierungen mit hoher Hitzebeständigkeit vom Typ einer Superlegierung auf Basis von Kobalt oder Nickel sind.

6. Verfahren nach Anspruch 5, **dadurch gekennzeichnet,**
**daß** die Superlegierung oder Superlegierungen aus der Familie von Superlegierungen auf der Basis von Nickel ausgewählt sind, die die unter den Marken INCONEL 718 oder ASTROLOY bekannten Superlegierungen enthalten.

7. Verfahren nach Anspruch 5, **dadurch gekennzeichnet,**
**daß** die Superlegierung oder Superlegierungen aus der Familie von Superlegierungen auf der Basis von Kobalt ausgewählt sind, die die unter den Bezeichnungen GRADE 21 oder GRADE 6 bekannten Superlegierungen enthalten.

8. Warmschmiedegerät mit einer Oberflächenschicht (8) aus einer oder mehreren metallischen Legierungen mit hoher Hitzebeständigkeit auf einem metallischen Substrat (10), **dadurch gekennzeichnet,**
**daß** die Oberflächenschicht aus metallischer (metallischen) Legierung(en) mit hoher Hitzebeständigkeit (8) eine kristalline Struktur einer Abscheidung in geschmolzenem Zustand der genannten metallischen Legierung oder Legierungen mit hoher Hitzebeständigkeit durch Schmelzen mit Laserenergie bewirkt wird, und daß die Oberflächenschicht (8) und das Substrat (10) durch eine metallurgische Verbindung verbunden sind.

9. Gerät nach Anspruch 8, **dadurch gekennzeichnet,**
**daß** die metallische Legierung oder Legierungen mit hoher Hitzebeständigkeit Superlegierungen auf der Basis von Kobalt oder Nickel enthalten.

10. Gerät nach Anspruch 9, **dadurch gekennzeichnet,**
**daß** die Oberflächenschicht (8) aus metallischer (metallischen) Legierung(en) mit hoher Hitzebeständigkeit aus einer Superlegierung auf Basis von Nickel, die unter den Marken INCONEL 718 oder ASTROLOY bekannt sind, besteht oder aus einer Superlegierung aus Kobalt, die unter den Bezeichnungen GRADE 21 oder GRADE 6 bekannt ist.

## Claims

1. A method of manufacturing hot forging tools having a surface layer of one or more metal alloys having high strength at high temperature on a metal substrate (10), **characterized in that** said surface layer is formed by depositing said metal alloy(s) with high strength at high temperature in the molten state, and said metal alloy(s) with high strength at high temperature are fused in order to deposit them by means of a power laser (20), which simultaneously assures the metallurgical bond between said metal alloy(s) of said surface layer and the metal of said substrate (10).

2. The method claimed in claim 1, **characterized in that** said metal alloy(s) having high strength at high temperature are sprayed in powder form onto said substrate (10) in the impact area (25) of the laser beam (21) from said power laser (20).

3. The method claimed in claim 2, **characterized in that** said metal alloy(s) having high strength at high temperature are sprayed in powder form by means of a coaxial spray nozzle (27) around said laser beam (21).

4. The method claimed in any one of claims 1 to 3, **characterized in that** said impact area (25) of said laser beam (21) on said substrate (10) is swept at a controlled constant speed.

5. The method claimed in any one of claims 1 to 4, **characterized in that** said metal alloy(s) having high strength at high temperature are of the cobalt-based or nickel-based superalloy type.

6. The method claimed in claim 5, **characterized in that** said superalloy(s) are chosen from the family of nickel-based superalloys including the superalloys known under the marks INCONEL 718 or ASTROLOY.

7. The method claimed in claim 5, **characterized in that** said superalloy(s) are chosen from the family of cobalt-based superalloys including the superalloys known under the terms GRADE 21 or GRADE 6.

8. A hot forging tool, comprising a surface layer (8) of metal alloy(s) having high strength at high temperature on a metal substrate (10), **characterized in that** the surface layer (8) of metal alloy(s) having high strength at high temperature has a crystallographic structure of a deposit of metal alloy(s) with high strength at high temperature in the molten state effected by power laser fusion, and **in that** the surface layer (8) and said substrate (10) are metallurgically bonded.

9. The tool claimed in claim 8, **characterized in that** said metal alloy(s) having high strength at high temperature comprise cobalt-based or nickel-based superalloys.

10. The tool claimed in claim 9, **characterized in that** said metal alloy(s) having high strength at high temperature of said surface layer (8) are nickel-based superalloy known under the marks INCONEL 718 or ASTROLOY, or cobalt-based superalloy known under the terms GRADE 21 or GRADE 6.
